# EUROPEAN PATENT SPECIFICATION

(11) **EP 1 273 186 B1**
(45) Date of publication and mention of the grant of the patent: **15.06.2005**
(21) Application number: 01927958.7
(22) Date of filing: 10.04.2001
(51) Int. Cl.: H04Q 7/22

(54) **METHOD FOR BLOCKING THE USE OF A SERVICE IN A TELECOMMUNICATION SYSTEM**
VERFAHREN ZUM BLOCKIEREN DER BENUTZUNG EINES DIENSTES IN EINEM TELEKOMMUNIKATIONSSYSTEM
PROCEDE PERMETTANT DE BLOQUER L'UTILISATION D'UN SERVICE DANS UN SYSTEME DE TELECOMMUNICATION

(30) Priority: 10.04.2000 FI 20000852
(43) Date of publication of application: 08.01.2003
(73) Proprietor: TeliaSonera Finland Oyj, 00510 Helsinki (FI)
(72) Inventor: ALA-LUUKKO, Sami, FIN-00200 Helsinki (FI)
(74) Representative: Simmelvuo, Markku
(86) International application number: PCT/FI2001/000354
(87) International publication number: WO 2001/078428

(56) References cited:
- WO-A1-00/42790
- WO-A1-99/27726

## Description

The present invention relates to telecommunication technique.

In particular, the invention relates to a method of controlling the use of a short message service in a telecommunication system comprising a telecommunication network, a terminal device, by which the subscriber is connected to the telecommunication network, a mobile services switching center which is connected to the telecommunication network, a gateway which is connected to the telecommunication network and which comprises functions connected with the transmission of traffic, a short message service center which is connected to the gateway, a database which is connected to the gateway and to which subscriber information may be saved. The method in accordance with the invention enables one to block the transmission of short messages sent to a certain numerical space, containing a certain search word as well as a certain information content.

### BACKGROUND OF THE INVENTION

Mobile communication networks, such as digital GSM networks (GSM, Global System for Mobile Communications), have become very popular in a big part of the world. The advantage of the mobile communication networks as compared to traditional fixed telephone networks is the air interface between the terminal device and the actual network that enables a wide-ranging mobility.

Since the introduction of the digital mobile networks, the services provided have included a short message service (SMS, Short Message Service). In the short message service, the user of a mobile station may send a short message that contains up to 160 characters from his/her mobile station, e.g. to another user of a mobile station who has got a terminal device capable of receiving a short message. The short message is transmitted in an air interface outside the actual speech time slots. This enables one to receive short messages, although there would be a call going on at the moment of receipt.

At present, the short messages have become very popular among the subscribers, and the operators have developed a remarkable number of short messages for additional charges. This means in practice that a certain area is allocated from the numerical space for these services. Technically this means that separate analyses are generated in the short message service center for these numbers. Based on these analyses, the short messages are transmitted further on.

The short message service has been activated for a certain subscriber or it has not been activated.

The reference publication WO 9927726 describes a method and system for filtering incoming short messages. A subscribes creates in the Home Location Register (HLR) a list of originating entities from which short messages will either be accepted of rejected. Based on the list, a subscriber is able to determine whether he/she wants to block or receive short messages from a particular number. Furthermore, the sender of a short message is provided with information whether the sending of the short message to the recipient subscriber was successful or unsuccessful.

The prior art solutions, including the reference publication WO 9927726, fail to provide a solutions with which it would be possible to block the sending of short messages to certain destination numbers, e.g. to specially priced service numbers for a subscriber. Therefore, there is an obvious need for a solution that would solve this problem.

### BRIEF DESCRIPTION OF THE INVENTION

In the background of the invention there is the idea that if one starts to merchandise short messages for additional charges, then some authorities of the telephone traffic may require the building of a blocking service connected with them. In the same way as certain telephone numbers may be blocked, if required, also certain short messages would be blocked as well. The objective of the invention is to enable the required blocking.

The present invention is used for the controlling of the use of short message services as a functionality of the network in such a way that there is a SMS barring and a subscriber-specific database installed in the network. The database contains information on whether there is a blocking of transmission defined for a certain subscriber. If there is a blocking defined, then the SMS barring has to be able to judge, based on the information included in the database and on the destination number of the short message or on the possible search word included in it, whether the sending of a short message is allowed for the subscriber in question. If the subscriber is not entitled to use the aforementioned service, then the short message is not transmitted further on.

The invention relates to a method and a system of controlling a short message service in a mobile communication system comprising a telecommunication network, a terminal device, by which the subscriber is connected to the telecommunication network, a mobile services switching center which is connected to the telecommunication network, a gateway which is connected to the telecommunication network and which comprises functions connected with the transmission of traffic, a short message service center which is connected to the gateway, a database which is connected to the gateway and to which subscriber information may be saved, and a signalling block for notifying the subscriber of the blocking of the transmission of a short message. In addition, the system in accordance with the invention comprises a first and a second signal interface in the environment of the gateway. The operation of the gateway has been arranged so that the communication between the different network components via the first and second signal interface is possible.

In the method, a subscriber-specific list of destination numbers is determined in the database. The list specifies destination numbers to which the subscriber is not allowed to send short messages. The subscriber creates a short message and the short message is sent as a short message to the telecommunication network. The short message is routed to the short message service center, in which the short messages arrived are checked, i.e. whether the destination number of the short message is among specially priced service numbers. From the short message service center, only those short messages are sent to the gateway that in response to the checking are among those that will be sent further on. After this, it is checked in the database included in the gateway whether the destination number of the short message is in the list of destination numbers to which the subscriber is not allowed to send short messages. In case it is stated, in response to the checking, that the destination number of the short message is found in the list, the transmission of the short message is blocked and the subscriber is informed of the blocking of the transmission of the short message. This notification may be transmitted to the terminal device, e.g. by a short message or a USSD (Unstructured Supplementary Service Data) or by some other suitable mechanism.

In one embodiment of the invention, the short message is checked based on its text content.

The blocking definitions of a short message may be attached to the blocking information located in the home location register, defined by the operator.

In addition, the invention relates to a system of controlling the use of a short message service in a telecommunication system comprising a telecommunication network, a terminal device, by which the subscriber is connected to the telecommunication network, a mobile services switching center which is connected to the telecommunication network, a gateway which is connected to the telecommunication network and which comprises functions connected with the transmission of traffic, a short message service center which is connected to the gateway, a database which is connected to the gateway and to which subscriber information and different definitions may be saved, and a signalling block for notifying the subscriber of the blocking of the transmission of the short message.

In the system, subscriber information and different definitions in the database comprise a subscriber-specific list of destination numbers to which the subscriber is not allowed to the send short messages. Furthermore, a checking block is used to check, according to a first checking condition in the short message service center, whether the destination number of the short message is among specially priced service numbers. After this, a database block is used to check whether the destination number of the short message is in the list of destination numbers to which the subscriber is not allowed to the send short messages. Furthermore, a blocking block blocks the short message if the destination number of the short message is found in the list.

The aforementioned checking block may be configured to check the short message based on a second checking condition according to the text content written by the subscriber.

In one embodiment of the system in accordance with the invention, the database is located in the mobile services switching center of the A-subscriber, the gateway or the short messages switching center, and the aforementioned components of the mobile communication system check the blocking definitions in the database. The database may also be an external database connected to the mobile services switching center, gateway or the short message service center.

In one embodiment of the invention, the database is based on the functionality of the interface between the home location register and the visitor location register, in which case from the point of view of the operator of the home network, the home location register functions as the master database. The purpose is that when the mobile station moves over to the area of a certain mobile services switching center, the information about the blocking of the transmission of the short message is copied from the database to the visitor location register according to normal procedures of the GSM mobile communication system.

In one embodiment of the invention, there is a signaling block arranged in the gateway that is used to send the signals needed in the blocking of the transmission of a short message between the first and the second interface.

In one embodiment of the system in accordance with the invention there is a saving block arranged in the system that is used to attach the blocking definitions of the short message to the blocking information located in the home location register (HLR, Home Location Register), defined by the operator.

As compared to prior art, the invention provides the advantage that the shared use of modified databases and network elements enables one to control the access rights of short message services based on the subscriber number or a search word.

### BRIEF DESCRIPTION OF THE DRAWINGS

In the following section, the invention will be described by the aid of a few examples of its embodiments with reference to the accompanying drawing, in which
Fig. 1 represents one advantageous system in accordance with the invention,
Fig. 2 is one advantageous signaling diagram illustrating the function of the present invention,

### DETAILED DESCRIPTION OF THE INVENTION

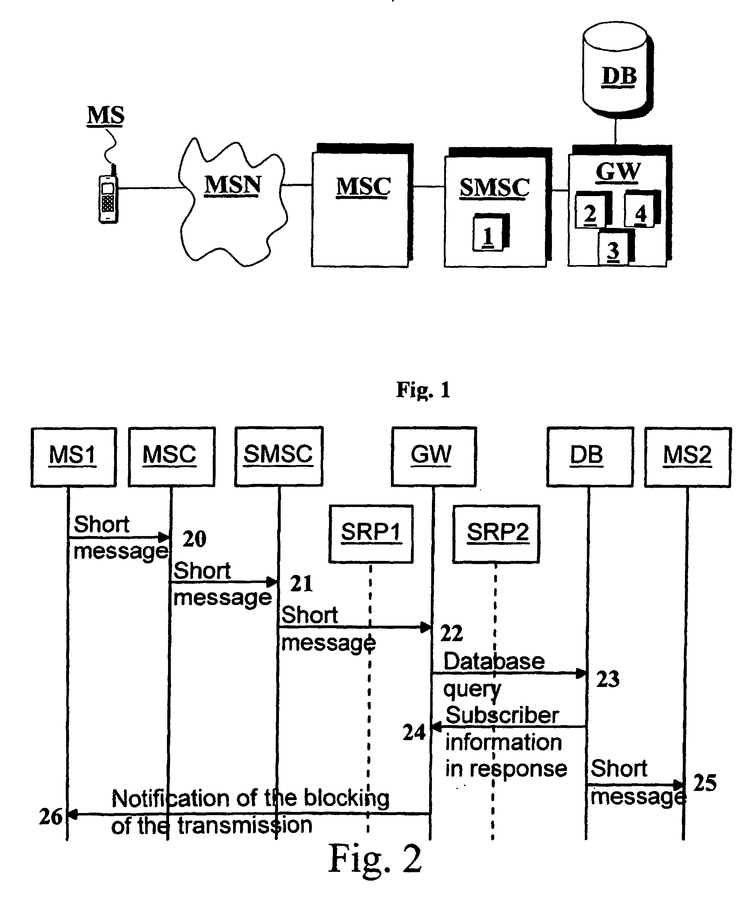

The system as shown in Fig. 1 comprises a terminal device MS and a telecommunication network MSN. In this example, the telecommunication network MSN is a mobile communication network. The terminal device MS is preferably a mobile station. The mobile station MS is connected to the mobile communication network MSN by a radio interface. The system comprises, in addition, a mobile services switching center MSC, a short message service center SMSC, a gateway GW, a database DB. The mobile services switching center MSC is connected to the mobile communication network MSN and to the short message service center SMSC. The gateway GW is connected to the short message service center SMSC, and the database DB is connected to the gateway GW.

In the short message service center SMSC there is arranged a checking block 1 which is used to check, based on a first checking condition in the short message service center, whether the short message is among non-allowed short messages. The aforementioned checking block 1 is used to check the short message based on a second checking condition according to the destination number dialed by the subscriber. This is to find out whether the short messages are among the messages for additional charges. In addition, the checking block 1 is used to check the short message according to a third checking condition based on the text content written by the subscriber. In addition to the number, the user may have input a search word of the service in the text part of the short message, e.g. the word "balance". By the search word the subscriber may refer to number of services of different prices that have been grouped as being in different blocking classes.

The gateway GW means in this example a server computer in which there is a piece of software which supports the GSM system and the signaling protocols needed in it. The gateway GW comprises, among other things, the following components and facilities. It contains the databases for the saving of subscriber-specific information as well as the signaling components, e.g. the SS7 (SS7, Signalling System number 7) for signaling, in which case the different signaling interfaces required by the communication may be matched.

The gateway GW comprises also the necessary software (e.g. the service creation, execution and management environment, descriptions of services). In addition, the gateway GW comprises the signaling protocols (INAP, MAP, TCAP, TCP/IP, SM-TP; in which INAP is the Intelligent Network Application Part, i.e. the protocol needed in the performing of applications between the networks, MAP is the Mobile Application Part, i.e. the network signaling of the GSM, TCAP is the Transaction Capabilities Application Part, TCP/IP is the Transmission Control Protocol, the Internet Protocol is the protocol needed in the controlling of data transfer and in the Internet transmission, and the SM-TP is the Short Message Transfer Protocol, i.e. the protocol needed in the transmission of short messages.

In this example, the gateway GW is connected to the short message service center SMSC and to the database DB. The gateway GW receives the short message from the short message service center SMSC and analyzes the short message.

From the point of view of the operator, the dialing of the subscriber contains significant identification information that is compared with the information included in the database of the gateway GW. After the aforementioned identification, the database block 2 of the gateway GW is used to check in the database DB, based on the blocking definitions, whether the subscriber is entitled to send the short message. In the invention there is a signaling block 3 arranged in the gateway GW that is used to send the signals needed in the blocking of the transmission of the short message between the first and the second signal interface, conforming to the aforementioned protocols.

It is also possible to define in the database DB protocols based on which the sending of the short message to the recipient (B-subscriber) is blocked.

In the invention, the database DB is external or internal. The external database is e.g. a home location register HLR. In that case, the database DB is based on the functionality of the interface between the home location register HLR and the visitor location register VLR, in which case from the point of view of the operator of the home network, the home location register (HLR, Home Location Register) functions as the master database. In that case, the saving block 4 of the gateway GW is used to attach the blocking definitions of the short message to the blocking information located in the home location register HLR, defined by the operator. The aforementioned database DB is located in the mobile services switching center MSC, gateway GW or in the short message service center SMSC.

Fig. 2 is one advantageous signaling diagram illustrating the function of the present invention. The short message is sent from the terminal device MS1 to the mobile services switching center MSC, arrow 20. The short message is transmitted from the mobile service switching center MSC to the short message service center SMSC, arrow 21. The short message service center receives the short message, analyzes it and sends only those short messages to the gateway GW that based on the analysis are among the short messages to be transmitted further on, arrow 22.

The gateway GW receives the short message and checks by a database query in the database DB whether the subscriber is entitled to send the short message, arrow 23. At this point, the signaling block of the gateway GW takes care of the compatibility of the traffic between the first and the second signal interface SRP1, SRP2. The first signal interface SRP1 is used to mean the interface between the gateway GW and the short message service center SMSC. The second signal interface SRP2 is used to mean the interface between the gateway GW and the database DB.

The database query of the gateway GW may be made by using, e.g. a structured query language (SQL, Structured Query Language). In response to the database query the gateway GW gets the subscriber information back that shows whether the subscriber is entitled to send a short message or whether the transmission is blocked, arrow 24. If there is no blocking of transmission defined for the subscriber, then the transmission is allowed, arrow 25. If the transmission is blocked, a notification of the blocking of the transmission is sent from the gateway GW to the mobile services switching center MSC, arrow 26. This notification about the blocking of the transmission may be sent by a short message, USSD (Unstructured Supplementary Service Data) or by some other suitable mechanism.

In one embodiment, when the client orders a blocking service, the operator creates for the client an information field in the database. The client may also himself/herself add or eliminate telephone numbers from the blocking service. This may be done e.g. by way of a www user interface arranged for the client. In addition, the operation of the gateway GW may be provided with different functions connected with short messages.

The invention is not restricted merely to examples of its embodiments, instead many variations are possible within the scope of the inventive idea.

## Claims

1. A method for preventing the sending of a short message to a destination number in a telecommunication system comprising the steps of:
sending a short message;
routing the short message included in the terminal device to a short message service center (SMSC);
determining whether the transmission of the short message should be blocked, and if it to be blocked,
blocking the transmission of the short message, and
notifying the sender of the short message of the blocking of the short message;
**characterized in that** the method further comprises the steps of:
determining in a database (DB) a subscriber-specific list of destination numbers to which the subscriber is not allowed to send short messages;
checking before transmitting the short message whether the destination number of the short message is among specially priced service numbers; if the short message belongs to the aforementioned group,
checking in the database (DB) whether the destination number of the short message is in the list of destination numbers to which the subscriber is not allowed to send short messages; and if in response to the aforementioned checking the destination number of the short message is found in the list,
blocking the transmission of the short message.

2. The method according to claim 1, **characterized in that** the short message is checked according to the text content written by the subscriber.

3. The method according to claim 1 or 2, **characterized in that** the blocking definitions are attached to the blocking information located in the home location register (HLR), defined by the operator.

4. The method according to claims 1-3, **characterized in that** the blocking definition of the transmission of short messages is done by way of the www user interface.

5. A system of controlling the use of a short message service in a telecommunication system comprising:
a telecommunication network (MSN);
a terminal device (MS) by which the subscriber is connected to the aforementioned telecommunication network (MSN);
a mobile services switching center (MSC) which is connected to the telecommunication network (MSN);
a gateway (GW) which is connected to the aforementioned telecommunication network (MSN) and which comprises functions connected with the transmission of traffic;
a short message service center (SMSC) which is connected to the aforementioned gateway (GW);
a database (DB) which is connected to the aforementioned gateway (GW) and to which subscriber information and different definitions have been saved;
a signaling block (3) for notifying the subscriber of the blocking of the transmission of a short message;
**characterized in that** the system further comprises:
subscriber information and different definitions in the database (DB) comprising a subscriber-specific list of destination numbers to which the subscriber is not allowed to the send short messages;
a checking block (1) which is used to check, based on a first checking condition, whether the destination number of the short message is among specially priced service numbers;
a database block (2) which is used to check in the database (DB) whether the destination number of the short message is in the list of destination numbers to which the subscriber is not allowed to the send short messages; and
a blocking block (GW) for blocking the short message if the destination number of the short message is found in the list.

6. The system according to claim 5, **characterized in that** the aforementioned checking block (1) is used check the short message, based on a second checking condition, according to its text content.

7. The system according to claim 5, **characterized in that** the database (DB) has been arranged in the mobile services switching center (MSC) , gateway (GW) or the short message service center (SMSC).

8. The system according to claim 5 or 7, **characterized in that** the database (DB) is an external database connected to the mobile services switching center (MSC), gateway (GW) or the short message service center (SMSC).

9. The system according to claim 5, 7 or 8, **characterized in that** the database (DB) is based on the functionality of the interface between the home location register (HLR) and the visitor location register (VLR), in which case from the point of view of the operator of the home network, the home location register (HLR) functions as the master database.

10. The system according to claim 5, 6, 7, 8 or 9, **characterized in that** the gateway (GW) comprises a signaling block (3) which is used to send the signals needed in the blocking of the short messages between the first and the second signal interface (SRP1, SRP2).

11. The system according to claim 5, 7, 8, 9 or 10, **characterized in that** the system comprises a saving block (4) by which the blocking definitions of the short message are attached to the blocking information located in the home location register (HLR), defined by the operator.

## Patentansprüche

1. Verfahren zum Verhindern des Sendens einer Kurzmitteilung an eine Zielnummer in einem Telekommunikationssystem, welches die Schritte aufweist:
Senden einer Kurzmitteilung;
Leitweglenken der Kurzmitteilung, welche in der Endgerätevorrichtung enthalten ist, an ein Kurzmitteilungsdienstzentrum (SMSC);
Bestimmen, ob die Übertragung bzw. das Senden der Kurzmitteilung blockiert werden sollte, und, falls dieses zu blockieren ist,
Blockieren des Sendens der Kurzmitteilung, und
Benachrichtigen des Absenders der Kurzmitteilung über das Blockieren der Kurzmitteilung;
**dadurch gekennzeichnet, dass** das Verfahren ferner die Schritte aufweist:
Bestimmen bzw. Festlegen in einer Datenbank (DB) einer teilnehmerspezifischen Liste von Zielnummern, an welche es dem Teilnehmer nicht erlaubt ist, Kurzmitteilungen zu senden;
Prüfen, vor dem Senden der Kurzmitteilung, ob die Zielnummer der Kurzmitteilung unter speziell **gekennzeichneten** Dienstnummern ist; falls die Kurzmitteilung zu der zuvor erwähnten Gruppe gehört,
Prüfen in der Datenbank (DB), ob die Zielnummer der Kurzmitteilung in der Liste der Zielnummern ist, an welche es dem Teilnehmer nicht gestattet ist, Kurzmitteilungen zu senden, und falls aufgrund des zuvor erwähnten Prüfens die Zielnummer der Kurzmitteilung in der Liste gefunden wird, Blockieren des Sendens der Kurzmitteilung.

2. Verfahren nach Anspruch 1, **dadurch gekennzeichnet, dass** die Kurzmitteilung bezüglich des Textinhaltes, welcher von dem Teilnehmer geschrieben ist, geprüft wird.

3. Verfahren nach Anspruch 1 oder 2, **dadurch gekennzeichnet, dass** die Blockierdefinitionen der Blockierinformation angefügt sind, welche in dem Heimatregister (HLR) platziert ist, definiert durch den Operator.

4. Verfahren nach den Ansprüchen 1-3, **dadurch gekennzeichnet, dass** die Blockierdefinition des Übertragens bzw. Sendens von Kurzmitteilungen mit Hilfe des WWW-Nutzer-Interface durchgeführt wird.

5. System zum Steuern des Nutzens eines Kurzmitteilungsdienstes in einem Telekommunikationssystem, welches aufweist:
ein Telekommunikationsnetzwerk (MSN);
eine Endgerätevorrichtung (MS), mit welcher der Teilnehmer an das zuvor erwähnte Telekommunikationsnetzwerk (MSN) angeschlossen ist;
ein Mobildienst-Vermittlungszentrum (MSC), welches an das Telekommunikationsnetzwerk (MSN) angeschlossen ist;
eine Überleiteinrichtung bzw. Gateway (GW), welche an das zuvor erwähnte Telekommunikationsnetzwerk (MSN) angeschlossen ist und welche Funktionen aufweist, welche mit dem Übertragungs- bzw. Sendeverkehr verbunden sind;
ein Kurzmitteilungsdienstezentrum (SMSC), welches mit der zuvor erwähnten Überleiteinrichtung (GW) verbunden ist; eine Datenbank (DB), welche mit der zuvor erwähnten Überleiteinrichtung (GW) verbunden ist und in welcher Information des Teilnehmers und verschiedene Definitionen gespeichert worden sind;
einen Signalisierblock (3) zum Benachrichtigen des Teilnehmers über das Blockieren der Übertragung einer Kurzmitteilung;
**dadurch gekennzeichnet, dass** das System ferner aufweist:
eine Teilnehmerinformation und verschiedene Definitionen in der Datenbank (DB), welche eine teilnehmerspezifische Liste von Zielnummern aufweist, an welche es dem Teilnehmer nicht gestattet ist, Kurzmitteilungen zu senden;
einen Prüfblock (1), welcher benutzt wird, um zu prüfen, basierend auf einer ersten Prüfbedingung, ob die Zielnummer der Kurzmitteilung unter den speziell **gekennzeichneten** Dienstnummern ist;
einen Datenbankblock (2), welcher benutzt wird, um in der Datenbank (DB) zu prüfen, ob die Zielnummer der Kurzmitteilung in der Liste der Zielnummern ist, an welche es dem Teilnehmer nicht gestattet ist, die Kurznachrichten zu senden; und
einen Blockierblock (GW) zum Blockieren der Kurznachricht, falls die Zielnummer der Kurzmitteilung in der Liste gefunden wird.

6. System nach Anspruch 5, **dadurch gekennzeichnet, dass** der zuvor erwähnte Prüfblock (1) benutzt wird, um die Kurzmitteilung basierend auf einer zweiten Prüfbedingung zu prüfen, entsprechend ihrem Textinhalt.

7. System nach Anspruch 5, **dadurch gekennzeichnet, dass** die Datenbank (DB) in dem Mobildienst-Vermittlungszentrum (MSC), der Überleiteinrichtung (GW) oder dem Kurzmitteilungsdienstzentrum (SMSC) angeordnet wurde.

8. System nach Anspruch 5 oder 7, **dadurch gekennzeichnet, dass** die Datenbank (DB) eine externe Datenbank ist, welche an das Mobildienst-Vermittlungszentrum (MSC), die Überleiteinrichtung (GW) oder das Kurzmitteilungsdienstzentrum (SMSC) angeschlossen ist.

9. System nach Anspruch 5, 7 oder 8, **dadurch gekennzeichnet, dass** die Datenbank (SB) auf der Funktionalität des Interface zwischen dem Heimatregister (HLR) und dem Besucherregister (VLR) beruht, wobei aus der Sicht des Operators des Heimatnetzwerks das Heimatregister (HLR) als die Master-Datenbank funktioniert bzw. fungiert.

10. System nach Anspruch 5, 6, 7, 8 oder 9, **dadurch gekennzeichnet, dass** die Überleiteinrichtung (GW) einen Signalisierblock (3) aufweist, welcher benutzt wird, um die Signale, welche zum Blockieren der Kurzmitteilungen zwischen dem ersten und dem zweiten Signal-Interface (SRP1, SRP2) benötigt werden, zu senden.

11. System nach Anspruch 5, 7, 8, 9 oder 10, **dadurch gekennzeichnet, dass** das System einen Speicherblock (4) aufweist, mit welchem die Blockierdefinitionen der Kurzmitteilung an die Blockierinformation angefügt werden, welche in dem Heimatregister (HLR) platziert ist, definiert durch den Operator.

## Revendications

1. Procédé permettant d'empêcher l'envoi d'un message court à un numéro de destination dans un système de télécommunication, comprenant les étapes consistant à :
envoyer un message court ;
acheminer le message court inclus dans le dispositif de terminal vers un centre de services de messages courts (SMSC) ;
déterminer si la transmission du message court doit être bloquée, et, le cas échéant,
bloquer la transmission du message court, et
prévenir l'expéditeur du message court que le message court est bloqué ;
**caractérisé en ce que** le procédé comprend les étapes consistant à :
déterminer, dans une base de données (DB), une liste, spécifique aux abonnés, de numéros de destination auxquels l'expéditeur n'est pas autorisé à envoyer des messages courts ;
vérifier, avant d'émettre le message court, si le numéro de destination du message court fait partie des numéros de service faisant l'objet d'une tarification spéciale ; si le message court appartient à la catégorie susmentionnée,
vérifier, dans la base de données (DB), si le numéro de destination du message court figure dans la liste de numéros de destination auxquels l'abonné n'est pas autorisé à envoyer des messages courts ; et, si, suite à la vérification susmentionnée, le numéro de destination du message court apparaît dans la liste,
bloquer la transmission du message court.

2. Procédé selon la revendication 1, **caractérisé en ce que** le message court fait l'objet d'une vérification quant au contenu textuel écrit par l'abonné.

3. Procédé selon l'une quelconque des revendications 1 ou 2, **caractérisé en ce que** les définitions de blocage sont associées aux informations de blocage présentes dans l'enregistreur de localisation nominal (HLR), définies par l'opérateur.

4. Procédé selon l'une quelconque des revendications 1 à 3, **caractérisé en ce que** la définition de blocage de la transmission des messages courts est réalisée à l'aide de l'interface utilisateur www.

5. Système permettant de contrôler l'utilisation d'un service de messages courts dans un système de télécommunication, comprenant :
un réseau de télécommunication (MSN) ;
un dispositif de terminal (MS) par l'intermédiaire duquel l'abonné est connecté au réseau de télécommunication (MSN) susmentionné ;
un centre de commutation des services mobiles (MSC) qui est connecté au réseau de télécommunication (MSN) ;
une passerelle (GW) qui est connectée au réseau de télécommunication (MSN) susmentionné et qui comprend les fonctions associées à l'établissement du trafic ;
un centre de services de messages courts (SMSC) qui est connecté à la passerelle (GW) susmentionnée ;
une base de données (DB) qui est connectée à la passerelle (GW) susmentionnée et dans laquelle ont été sauvegardées les informations et différentes définitions relatives à l'abonné ;
un bloc de signalisation (3) permettant d'avertir l'abonné du blocage de la transmission d'un message court ;
**caractérisé en ce que** le système comprend en outre :
des informations et différentes définitions sur l'abonné dans la base de données (DB), comprenant une liste, spécifique à l'abonné, de numéros de destination auxquels l'abonné n'est pas autorisé à envoyer de messages courts ;
un bloc de vérification (1) utilisé pour vérifier, sur la base d'une première condition de vérification, si le numéro de destination du message court fait partie des numéros de service faisant l'objet d'une tarification spécifique ;
un bloc de base de données (2), utilisé pour vérifier dans la base de données (DB) si le numéro de destination du message court fait partie des numéros de destination auquel l'abonné n'est pas autorisé à envoyer des messages courts ; et
un bloc de blocage (GW) permettant de bloquer le message court si le numéro de destination du message court apparaît dans la liste.

6. Système selon la revendication 5, **caractérisé en ce que** le bloc de vérification (1) susmentionné est utilisé pour vérifier le message court, sur la base d'une deuxième condition de vérification, en fonction de son contenu textuel.

7. Système selon la revendication 5, **caractérisé en ce que** la base de données (DB) a été disposée dans le centre de commutation des services mobiles (MSC), la passerelle (GW) ou le centre de services de messages courts (SMSC).

8. Système selon l'une quelconque des revendications 5 ou 7, **caractérisé en ce que** la base de données (DB) est une base de données externe connectée au centre de commutation des services mobiles (MSC), à la passerelle (GW) ou au centre de services de messages courts (SMSC).

9. Système selon l'une quelconque des revendications 5, 7 ou 8, **caractérisé en ce que** la base de données (DB) repose sur la fonctionnalité de l'interface entre l'enregistreur de localisation nominal (HLR) et l'enregistreur de localisation des visiteurs (VLR), auquel cas, du point de vue de l'opérateur du réseau local domestique, le registre de localisation nominal (HLR) fonctionne comme une base de données principale.

10. Système selon l'une quelconque des revendications 5, 6, 7, 8 ou 9, **caractérisé en ce que** la passerelle (GW) comprend un bloc de signalisation (3) utilisé pour envoyer les signaux nécessaires lors du blocage des messages courts entre la première et la deuxième interface de signaux (SRP1, SRP2).

11. Système selon l'une quelconque des revendications 5, 7, 8, 9 ou 10, **caractérisé en ce que** le système comprend un bloc de sauvegarde (4), à l'aide duquel les définitions de blocage du message court sont associées aux informations de blocage présentes dans le registre de localisation nominal (HLR), définies par l'opérateur.
